# EUROPÄISCHE PATENTANMELDUNG

(11) **EP 1 223 106 A1**
(43) Veröffentlichungstag der Anmeldung: **17.07.2002**
(21) Anmeldenummer: 01127893.4
(22) Anmeldetag: 23.11.2001
(51) Int. Cl.: B65B 59/00, B65B 35/44, B65G 17/32

(54) **Vorrichtung zum Gruppieren von Gegenständen**

(30) Priorität: 11.01.2001 DE 10100969
(71) Anmelder: Rovema Verpackungsmaschinen GmbH, 35463 Fernwald (DE)
(72) Erfinder: Hoffmann, Matthias, 35423 Lich (DE); Baumeister, Bruno, 52396 Heimbach (DE); Baur, Walter, Dr., 63584 Gründau (DE)

(57) **Zusammenfassung**

Um in einfacher Weise bei einem umlaufenden Fächerband (6) den Abstand d zwischen zwei Querwänden (8) des Fächerbandes (6) verändern zu können, wird vorgeschlagen, sowohl einen Winkel α, welcher zwischen einer Querwand (8) und der Senkrechten (9) des Elementes (10), welches die Querwand (8) hält, als auch einen Winkel β, der zwischen einer Verbindungsgeraden (11) zweier Drehachsen (12, 13) von Umlenkrollen (4, 5) und einer durch eine Drehachse (12) verlaufenden Geraden (14) liegt, zu verändern.

## Beschreibung

Die Erfindung betrifft eine Vorrichtung zum Gruppieren von Gegenständen, z. B. Beutel, welche gruppenweise an eine Sammeleinrichtung abgegeben werden, mit einem Fächerband, welches um Umlenkräder umläuft und eine Vielzahl von Querwänden aufweist. An einer Einbringstation wird jeweils ein Gegenstand zwischen zwei Querwände gebracht, um die Gegenstände mittels des Fächerbandes der Sammeleinrichtung zuzuführen.

Eine Vorrichtung dieser Art ist aus der EP 0700 832 A bekannt. Bei dieser Vörrichtung läuft das Fächerband um vier Umlenkräder um. Jedes Kettenglied des Fächerbandes weist eine Querwand auf. Diese Querwände sind federartig ausgebildet, um zwischen den Querwänden befindliche Beutel ohne Ausbauchung der Beutel der Sammeleinrichtung zuzuführen. An der als Förderband ausgebildeten Sammeleinrichtung wird von jeweils einem Mitnehmer des Förderbandes ein Druck auf eine Gruppe von nebeneinander gestellten Beuteln ausgeübt, um die gleichmäßige Beuteldicke zu erhalten, und um anschließend diese Gruppe passgenau in einen Karton setzen zu können.

Die bekannte Vorrichtung hat den Nachteil, dass eine Veränderung des Abstandes zweier benachbarter Querwände nur in technisch relativ aufwendiger Weise erfolgen kann. Die federnden Platten haben zudem den Nachteil, dass sie auf unterschiedliche Füllgüter einen unterschiedlichen Effekt ausüben. So werden Beutel mit relativ leicht zu deformierendem Füllgut stärker und Beutel mit relativ schwer zu deformierendem Füllgut weniger abgeflacht, derart, dass schwere Füllgüter eine schwache Feder auseinanderdrücken können. Die Federkraft darf nicht zu groß sein, damit eine einfache Entnahme der Beutel aus dem Fächerband an der Sammeleinrichtung erfolgen kann.

Der Erfindung liegt die Aufgabe zu Grunde, eine Vorrichtung der eingangs beschriebenen Art so zu gestalten, dass in einfacher Weise der Abstand zweier benachbarter Querwände verändert werden kann.

Gelöst ist die Aufgabe gemäß dem kennzeichnenden Teil des Anspruchs 1. Danach bilden die Querwände einen vorgegebenen Winkel α zur Senkrechten der Elemente, welche jeweils eine Querwand halten, vorzugsweise starr halten, bilden die Verbindungsgerade zwischen den Drehachsen von zwei Umlenkrädem des Fächerbandes einerseits und eine durch eine Drehachse verlaufende Gerade andererseits einen vorgegebenen Winkel β, und sind diese Winkel α und β mittels einer Verstelleinrichtung verstellbar, um den Abstand d zwischen jeweils zwei Querwänden zu verändern.

Die erfindungsgemäße Vorrichtung hat den Vorteil, dass die Abstände der Querwände voneinander in einfacher Weise durch Verstellen der Winkel α und β verändert werden können. Ist zudem eine starre, nicht federnde Verbindung zwischen den Elementen und den Querwänden vorgegeben, so kann der Winkel α genau eingestellt werden, ohne dass eine Federung diesen Winkel verändern könnte.

Weitere vorteilhafte Ausgestaltungen der Erfindung sind in den Ansprüchen 2 bis 8 beschrieben.

Sind die Querwände starr, also nicht federnd ausgebildet (Anspruch 5), so ist die Einstellung eines konstanten, über die gesamte Höhe einer Querwand gültigen Winkels α in sicherer und zuverlässiger Weise möglich. Eine Federung im Bereich der Querwände, egal in welcher Weise würde zu einer Ungenauigkeit bezüglich des Winkels α führen.

Als einfach zu handhabende Verstelleinrichtung für den Winkel α ist eine austauschbare Steckverbindung (Anspruch 2) geeignet. Nach Austausch einer Steckverbindung, die einen bestimmten Winkel α für eine Querwand vorgibt, gegen eine Steckverbindung, die einen anderen Winkel α vorgibt, hat die mit der Steckverbindung verbundene Querwand eine andere Ausrichtung.

Es eignet sich als Verstelleinrichtung für den Winkel α auch eine winkelverstellbare Halterung für die Querwand (Anspruch 3). Diese Halterung kann z. B. mehrere Raststellungen für den Winkel α vorgeben. Zudem könnte die Halterung stufenlos verstellbar sein.

Ist als Verstelleinrichtung für den Winkel β eine Einrichtung zum Verschwenken einer Drehachse um die andere Drehachse vorgesehen, die zudem eine Arretierung für die verschwenkte Drehachse aufweist (Anspruch 4), so kann der Winkel β verstellt werden, ohne dass die Spannung des Fächerbandes verändert wird. Die Arretierung dient einem Feststellen der verschwenkten Drehachse in einer gewünschten Stellung, bei welcher der Winkel β erreicht ist. Bei einem um lediglich zwei Umlenkräder umlaufenden Fächerband sind die beiden Parallelstränge des Fächerbandes parallel zur Verbindungsgerade zwischen den Drehachsen der Umlenkräder ausgerichtet. Die Winkelverstellungen sind aber auch für um drei oder mehr Umlenkräder umlaufende Fächerbänder geeignet. Bei vier Umlenkräder beschreibt das Fächerband z. B. ein Parallelogramm oder lediglich ein Viereck. Hier gilt für einen Strang dieses Parallelogramms bzw. Vierecks, dass eine Drehachse eines Umlenkrades gegenüber einer Drehachse eines direkt vorher oder nachher angeordneten Umlenkrades verschwenkt werden muss, um den zwischen zwei aufeinanderfolgenden Umlenkräder sich erstreckenden Strang bezüglich eines neuen Winkels β auszurichten. Die Parallelität zwischen der Geraden und dem Strang gilt jedoch genauso wie bei einem Parallelstrang bei nur zwei Umlenkrädern nur dann, wenn die Umlenkräder gleichen Durchmesser haben.

Läuft das Fächerband in einer Vertikalebene um, so eignet sich die Vertikale als Gerade (Anspruch 6). Das Fächerband könnte aber auch in der Horizontalen umlaufen.

Ist an der Einbringstation eine, vorzugsweise kontinuierlich betriebene, umlaufende Einrichtung zum Heranführen der Gegenstände vorgesehen, und ist zudem die an der Einbringstation befindliche Querwand parallel zur Einrichtung ausgerichtet (Anspruch 7), so erfolgt das Einbringen der Gegenstände in das Fächerband besonders schnell und ohne größere mechanische Beanspruchung der Gegenstände. Ein Detektor an der Einbringstation (Anspruch 8) kann dazu eingesetzt werden, herangeführte Gegenstände zu erkennen, um über eine Regeleinrichtung das zeitgenaue Einbringen der Gegenstände in das weiterbewegte Fächerband zu regeln.

Im folgenden wird die Erfindung an Hand ein Ausführungsbeispiel darstellenden Figuren näher beschrieben. Es zeigt:
- Figur 1: in einer Seitenansicht ein vertikal um zwei Umlenkräder umlaufendes Fächerband, dessen Querwände einen vorgegebenen Winkel α zur Senkrechten der die Querwände jeweils haltenden Elemente bilden, und wobei die Drehachse des unteren Umlenkrades um die Drehachse des oberen Umlenkrades schwenkbar ist, um einen bestimmten Winkel β zwischen der Vertikalen und der Verbindungsgeraden der beiden Drehachsen einzustellen;
- Figur 2: in einer vereinfachten Darstellung einen Teil eines Parallelstrangs der Vorrichtung der Figur 1 bei bestimmten Winkel α und β, und mit einem bestimmten Abstand d zwischen jeweils zwei benachbarten Querwänden, sowie
- Figur 3: in einer vereinfachten Darstellung den Gegenstand der Figur 2, jedoch mit anderen Winkel α und β, welche zu einem anderen Abstand d führen.

Bei einer Vorrichtung 1 zum Gruppieren von Beutel 2, welche gruppenweise an eine Sammeleinrichtung 3 abgegeben werden, ist ein vertikal um zwei Umlenkräder 4, 5 umlaufendes Fächerband 6 dazu vorgesehen, die Beutel 2 von einer Einbringstation 7 zur Sammeleinrichtung 3 zu transportieren. Das Fächerband 6 weist eine Vielzahl an Querwänden 8 auf. Jeweils ein Beutel 2 wird zwischen zwei Querwänden 8 des sich im Uhrzeigersinn weiterbewegenden Fächerbandes 6 gebracht. Die Sammeleinrichtung 3 enthält ein Transportband 24 mit Mitnehmern 25.

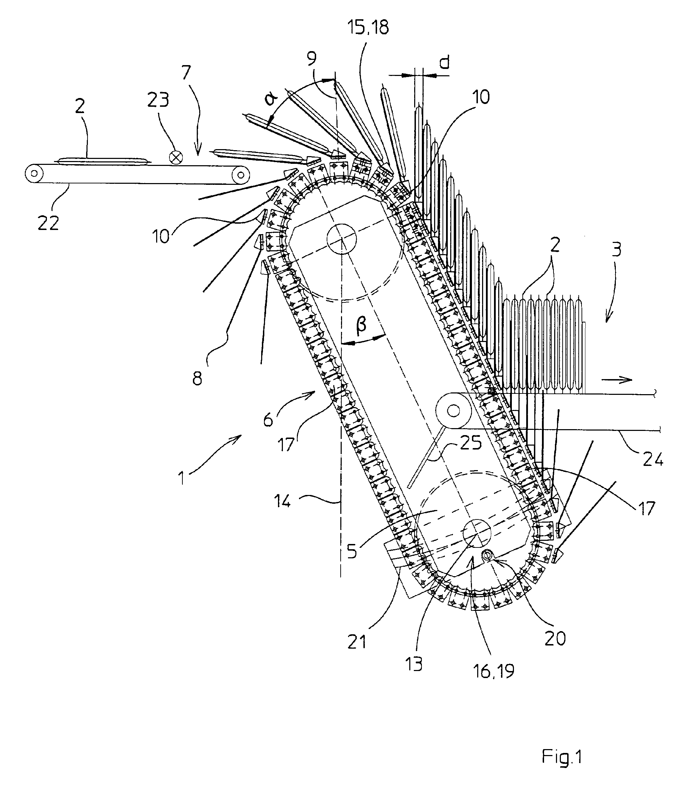

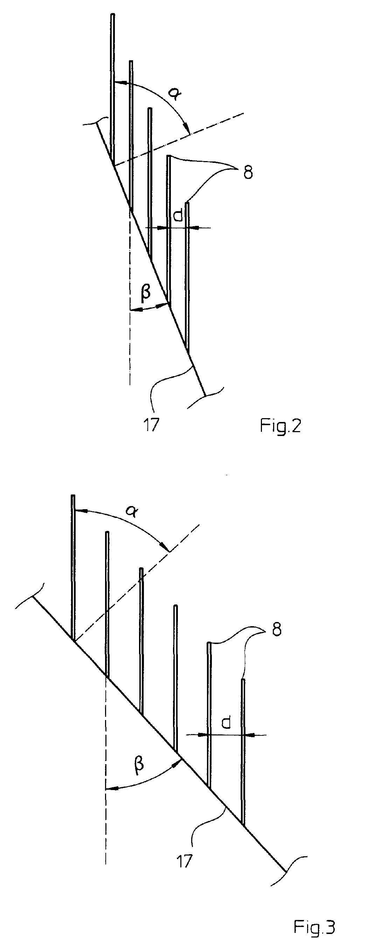

Jede Querwand 8 ist unter einem bestimmten Winkel α zur Senkrechten 9 des die Querwand 8 starr haltenden Elementes 10 ausgerichtet. Die Verbindungsgerade 11 zwischen den Drehachsen 12, 13 der beiden Umlenkräder 4, 5 und eine durch die obere Drehachse 12 verlaufende Gerade 14, welche die Vertikale ist, beschreiben einen Winkel β (Figur 2). Beide Winkel α und β sind zum Zwecke einer Veränderung des Abstandes d zwischen jeweils zwei Querwänden 8 mittels jeweils einer Verstelleinrichtung 15, 16 verstellbar (Figur 1, Figur 3). Der Abstand d ist nur entlang der beiden Parallelstränge 17 des Fächerbandes 6 konstant und sinnvoll vorzugeben.

Als Verstelleinrichtung 15 für den Winkel α ist eine austauschbare Steckverbindung 18 vorgesehen. Als Verstelleinrichtung 16 für den Winkel β ist eine Einrichtung 19 zum Verschwenken der unteren Drehachse 13 um die obere Drehachse 12 vorgesehen. Nach einer Verschwenkung ist der Winkel β verändert. Die verschwenkte untere Drehachse 13 ist mittels einer Arretierung 21 in ihrer neuen Position an der Schwenkbahn 21 feststellbar.

Die Querwände 8 sind absolut starr und nicht federnd ausgebildet, so dass der Winkel α für die gesamten Querwandbereiche gilt. An der Einbringstation 7 ist eine kontinuierlich umlaufende Einrichtung 22 zum Heranführen der Gegenstände vorgesehen. Die an der Einbringstation 7 befindliche Querwand 8 ist parallel zur Einrichtung 22 ausgerichtet, um ein störungsfreies Einbringen in das Fächerband 6 zu gewährleisten. Zwecks Abgleichs der Bewegungen der Einrichtung 22 und des Fächerbandes 6 erkennt ein Detektor 23 jeden ankommenden Beutel 2.

Die Winkel α und β werden dann verstellt, wenn ein neuer Abstand d zwischen den Querwänden 8 eingestellt werden soll (Figur 2 und 3). Ein neuer Abstand d wird gewählt, bevor Beutel 2 mit einer anderen Dicke in Kartons gesetzt werden sollen. Der Abstand d wird stets so gewählt, dass die Beutel 2 passgenau zwischen die Querwände 8 passen und derart nicht in ihrem unteren Bereich ausbauchen können, während sie sich im Fächerband 6 befinden. Bevor die Beutel 2 den Parallelstrang 17 erreichen, liegen sie noch relativ ausbauchsicher auf den Querwänden 8.
- 1: Vorrichtung
- 2: Beutel
- 3: Sammeleinrichtung
- 4, 5: Umlenkrad
- 6: Fächerband
- 7: Einbringstation
- 8: Querwand
- 9: Senkrechte
- 10: Element
- 11: Verbindungsgerade
- 12, 13: Drehachse
- 14: Gerade
- 15: Verstelleinrichtung für Winkel α
- 16: Verstelleinrichtung für Winkel β
- 17: Parallelstrang
- 18: Steckverbindung
- 19: Einrichtung zum Verschwenken
- 20: Arretierung
- 21: Schwenkbahn
- 22: Einrichtung zum Heranführen
- 23: Detektor
- 24: Transportbahn
- 25: Mitnehmer

## Patentansprüche

1. Vorrichtung zum Gruppieren von Gegenständen, insbesondere Beuteln (2), welche gruppenweise an eine Sammeleinrichtung (3) abgegeben werden, mit einem um Umlenkräder (4, 5) umlaufenden, eine Vielzahl Querwände (8) aufweisenden Fächerband (6), in welches an einer Einbringstation (7) jeweils ein Gegenstand zwischen zwei Querwänden (8) gebracht wird, um der Sammeleinrichtung (3) zugeführt zu werden, **dadurch gekennzeichnet, dass** die Querwände (8) einen vorgegebenen Winkel α zur Senkrechten (9) der die Querwände (8) jeweils haltenden, vorzugsweise starr haltenden Elemente (10) bilden, dass die Verbindungsgerade (11) zwischen den Drehachsen (12, 13) von zwei Umlenkrädern (4, 5) des Fächerbandes (6) und eine durch eine Drehachse (12) verlaufende Gerade (14) einen vorgegebenen Winkel β bilden, und dass diese Winkel α und β, zwecks Veränderung des Abstandes d zwischen jeweils zwei Querwänden (8), mittels einer Verstelleinrichtung (15, 16) verstellbar sind.

2. Vorrichtung nach Anspruch 1, **dadurch gekennzeichnet, dass** als Verstelleinrichtung (15) für den Winkel α eine austauschbare Steckverbindung (18) vorgesehen ist.

3. Vorrichtung nach Anspruch 2, **dadurch gekennzeichnet, dass** als Verstelleinrichtung für den Winkel α eine winkelverstellbare Halterung für eine Querwand vorgesehen ist.

4. Vorrichtung nach Anspruch 1, Anspruch 2 oder Anspruch 3, **dadurch gekennzeichnet, dass** als Verstelleinrichtung (16) für den Winkel β eine Einrichtung (19) zum Verschwenken einer Drehachse (13) um die andere Drehachse (12) vorgesehen ist, die zudem eine Arretierung (20) für die verschwenkte Drehachse (13) aufweist.

5. Vorrichtung nach Anspruch 1, Anspruch 2, Anspruch 3 oder Anspruch 4, **dadurch gekennzeichnet, dass** die Querwände (8) starr ausgebildet sind.

6. Vorrichtung nach mindestens einem der Ansprüche 1 bis 5, **dadurch gekennzeichnet, dass** das Fächerband (6) in einer Vertikalebene umläuft, und dass die Gerade (14) die Vertikale ist.

7. Vorrichtung nach Anspruch 6, **dadurch gekennzeichnet, dass** an der Einbringstation (7) eine, vorzugsweise kontinuierlich betriebene, umlaufende Einrichtung (22) zum Heranführen der Gegenstände vorgesehen ist, und dass sich die an der Einbringstation (7) befindliche Querwand (8) parallel zur Einrichtung (22) ausgerichtet ist.

8. Vorrichtung nach mindestens einem der Ansprüche 1 bis 7, **dadurch gekennzeichnet, dass** an der Einbringstation (7) ein Detektor (23) zum Erkennen eines herangeführten Gegenstandes vorgesehen ist.
